# EUROPÄISCHE PATENTSCHRIFT

(11) **EP 1 733 767 B1**
(45) Veröffentlichungstag und Bekanntmachung des Hinweises auf die Patenterteilung: **16.07.2008**
(21) Anmeldenummer: 06450070.5
(22) Anmeldetag: 08.05.2006
(51) Int. Cl.: A63B 23/03, A61H 23/02, G09B 15/00

(54) **Lippen-Massagegerät für Blechbläser**
Massage device for the lips of wind and brass players
Appareil de massage pour les lèvres d'un joueur d'instruments à vent

(30) Priorität: 14.06.2005 AT 10012005
(43) Veröffentlichungstag der Anmeldung: 20.12.2006
(73) Patentinhaber: Wegscheider, Hubert, A-9552 Steindorf am Ossiachersee (AT)
(72) Erfinder: Wegscheider, Hubert, A-9552 Steindorf am Ossiachersee (AT)
(74) Vertreter: Margotti, Herwig Franz

(56) Entgegenhaltungen:
- DE-A1- 3 433 356
- DE-A1- 3 606 077
- DE-A1- 4 030 973
- DE-A1- 10 139 688
- DE-B3-3102004 013 93
- DE-U1-0202005 004 63
- US-A- 5 839 895
- US-A- 5 967 784
- US-B1- 6 193 742
- US-B1- 6 264 678

## Beschreibung

Die Erfindung betrifft ein Lippen-Massagegerät für Blechbläser mit einer Vibrationseinrichtung zur Erzeugung mechanischer Schwingungen.

Blechblasinstrumente gehören zur Gruppe der Instrumente aus Metall mit einem kessel- oder trichterförmigen Mundstück, das auf ein gerades oder gebogenes, konisches oder zylindrisches Schallrohr aufgesetzt ist. Gemeinsames Merkmal der Blechblasinstrumente ist die Tonerzeugung durch die elastisch vorgespannten, nach dem Prinzip von Polsterzungen gegeneinander schwingenden Lippen des Bläsers. Die Reinheit der erzeugten Töne hängt wesentlich von der Lippenspannung des Musikers ab, die wiederum von der Lockerheit und Durchblutung der Lippen, insbesondere des Ansatzbereiches der Lippen am Mundstück des Blechblasinstruments beeinflusst wird. In der Musizierpraxis bedeutet dies für den Blechbläser, dass er sich vor Konzerten für eine erhebliche Zeitdauer auf seinem Instrument einspielen muss, um seine Lippen in einen Zustand zu bringen, der ein qualitätsvolles Musizieren ermöglicht. Diese Zeit steht für den Musiker nicht immer zur Verfügung, vielfach fehlt es vor Konzerten auch an entsprechenden Übungsräumen.

Der vorliegenden Erfindung liegt die Aufgabe zugrunde, die geschilderten Probleme von Blechbläsern zu lösen oder zumindest zu mildern. Die Erfindung löst diese Aufgabe durch Bereitstellen eines Lippen-Massagegeräts mit den Merkmalen des Anspruchs 1. Vorteilhafte Ausgestaltungen der Erfindung sind in den Unteransprüchen erläutert.

Das erfindungsgemäße Lippen-Massagegerät für Blechbläser weist eine Vibrationseinrichtung zur Erzeugung mechanischer Schwingungen auf, an die ein Mundstückadapter schwingungsgekoppelt ist, so dass sich von der Vibrationseinrichtung erzeugte mechanische Schwingungen möglichst ungedämpft auf den Mundstückadapter übertragen. Der Mundstückadapter wiederum besitzt eine Aufnahme für ein Mundstück eines Blechblasinstruments, in das der Musiker in Vorbereitung der Benutzung des Lippen-Massagegeräts das Mundstück seines eigenen Instruments einsetzen kann, so dass sich die Schwingungen der Vibrationseinrichtung auf das Instrumenten-Mundstück übertragen. Das erfindungsgemäße Lippen-Massagegerät kann von allen Blechbläsern verwendet werden kann. Blechbläser musizieren beispielsweise mit Trompete, Horn, Posaune, Bariton oder Tuba. Die Mundstücke von Blechblasinstrumenten enden in konischen oder angenähert zylindrischen Rohrstutzen unterschiedlichen Durchmessers, die auf das zugehörige Schallrohr des Instruments gesetzt oder darin eingesetzt werden. Um das Lippen-Massagerät universell für alle Blechbläser verwendbar zu machen sind in einer Ausgestaltung der Erfindung austauschbare Mundstückadapter vorgesehen, die spezifisch an die Rohrstutzen jeweiliger Mundstücke eines oder mehrerer Blechblasinstrumente angepasst sind. Da viele Musiker mehrere Instrumente spielen ist es für sie praktisch, ein erfindungsgemäßes Lippen-Massagegerät mit verschiedenen Mundstückadaptem verwenden zu können.

Nachdem das Mundstück des Blechblasinstruments vom Musiker in die Aufnahme des Mundstückadapters des Lippen-Massagegeräts gesteckt wurde, schaltet der Musiker die Vibrationseinrichtung ein und hält das Mundstück gegen seine Lippen. Durch das in Vibration gebrachte eigene Mundstück des Musikers werden die Lippen des Musikers genau an ihrem Ansatzbereich am Mundstück massiert und verstärkt durchblutet. Dies bewirkt eine hervorragende Lockerung, Massage und Durchblutung der Lippen, insbesondere im Ansatzbereich. Da die Vibrationsübertragung durch das Mundstück des eigenen Instruments des Musikers erfolgt muss er sich nicht umgewöhnen und ist die Durchblutung des Ansatzbereichs an den Lippen optimal. Mit dem erfindungsgemäßen Lippen-Massagegerät kann der Blechbläser seine Lippen vor dem Üben, vor Konzerten etc. bereits aufwärmen, massieren und dadurch eine verstärkte Durchblutung erwirken.

Der Musiker erzielt mit einer Anwendung des Geräts für weniger als fünf Minuten die gleiche Durchblutung der Lippen, die ansonsten nur durch ein ca. einstündiges Spielen von tiefen Tönen erzielt werden kann. Die Anwendung des Geräts bewirkt somit eine erhebliche Zeitersparnis für den Musiker. Gleichzeitig muss sich der Musiker auch nicht körperlich anstrengen und verkürzt die Einspielphase.

Weiters kann das erfindungsgemäße Lippen-Massagegerät nach Konzerten oder anstrengendem Üben auch zur Entspannung angewendet werden und ist für alle Blechbläser tauglich, egal ob Profi oder Anfänger.

Aus dem Dokument US 5,839,895 ist ein Gerät zur Verwendung bei der Behandlung von Mundgewebe bekannt, das einen Körper mit eingebauter Vibrationseinrichtung aufweist, von welchem Körper sich ein Schaft erstreckt, auf dessen freies Ende ein Kissen aus weichem, absorbierendem Material (Schaumstoff, Baumwolltupfer) aufsteckbar ist. Dieses Gerät ist als Lippen-Massagegerät für Blechbläser nicht geeignet.

In einer vorteilhaften, weil kompakten Ausgestaltung der Erfindung weist die Vibrationseinrichtung einen Elektromotor und ein an einer Antriebswelle des Elektromotors exzentrisch befestigtes Unwuchtgewicht auf Exzentrisch befestigt ist dabei in dem Sinn zu verstehen, dass der Schwerpunkt des Unwuchtgewichts aus der Drehachse der Antriebswelle versetzt ist, wobei das Unwuchtgewicht an der Antriebsachse rutschfest befestigt ist, so dass es sich mit der Antriebsachse mitdreht. Um die Vibrationen des Lippen-Massagegeräts an die Bedürfnisse und Vorlieben aller Blechbläser anpassen zu können ist in einer Fortbildung der Erfindung vorgesehen, die Drehzahl des Elektromotors verstellbar zu machen, wodurch die Frequenz der Vibrationen veränderbar ist. Die Amplitude der Vibrationen ist wiederum durch austauschbare, unterschiedlich schwere Unwuchtgewichte und/oder die Möglichkeit der Vertellung der Exzentrizität des Unwuchtgewichts in Bezug auf die Motorwelle veränderbar.

Damit der Blechbläser während der Benutzung des Lippen-Massagegeräts auch Atemübungen etc. ausführen kann, ist in einer weiteren Ausgestaltung der Erfindung die Aufnahme des Mundstückadapters für ein Mundstück eines Blechblasinstruments als Durchgangsloch ausgebildet, so dass die durch das Mundstück strömende Atemluft des Musikers aus dem Mundstückadapter austreten kann.

Vorteilhafterweise umfasst das Lippen-Massagegerät für Blechbläser ein Gehäuse, in dem die Vibrationseinrichtung schwingungsgekoppelt aufgenommen ist und an dem der Mundstückadapter befestigbar oder in das er integriert ist. Die von der Vibrationseinrichtung erzeugten mechanischen Schwingungen werden somit kaum gedämpft auf das Gehäuse und vom Gehäuse auf den Mundstückadapter übertragen.

Für eine möglichst lange Lebensdauer des erfindungsgemäßen Lippen-Massagegeräts ist weiters vorgesehen, dass die Vibrationseinrichtung, vorzugsweise zusammen mit einer Energieversorgungseinheit, wie z.B. einer Batterie oder einem Akkumulator, hermetisch im Gehäuse verschließbar ist, so dass sie nicht Beeinträchtigung durch Kondenswasser etc. unterliegt.

Wie oben erwähnt, ist es vorteilhaft, wenn der Musiker während der Verwendung des Lippen-Massagegeräts auch Atemübungen durchführen kann. Dafür ist weiters vorgesehen, dass im Mundstückadapter und/oder im Gehäuse Luftführungen angeordnet sind, durch die die Aufnahme des Mundstückadapters bzw. bei eingesetztem Mundstück das Mundstück mit der Umgebung kommunizieren kann.

Um eine möglichst verlustfreie, d.h. ungedämpfte, Übertragung der von der Vibrationseinrichtung erzeugten mechanischen Schwingungen auf den Mundstückadapter zu gewährleisten, sollten der Mundstückadapter und gegebenenfalls das Gehäuse aus einem schwingungssteifen Material, wie z.B. Metall, Metalllegierungen oder Hartplastik, geformt sein. Als sehr geeignet hat sich beispielsweise Messing erwiesen, neben Kunststoff ist aber auch Holz gut verwendbar.

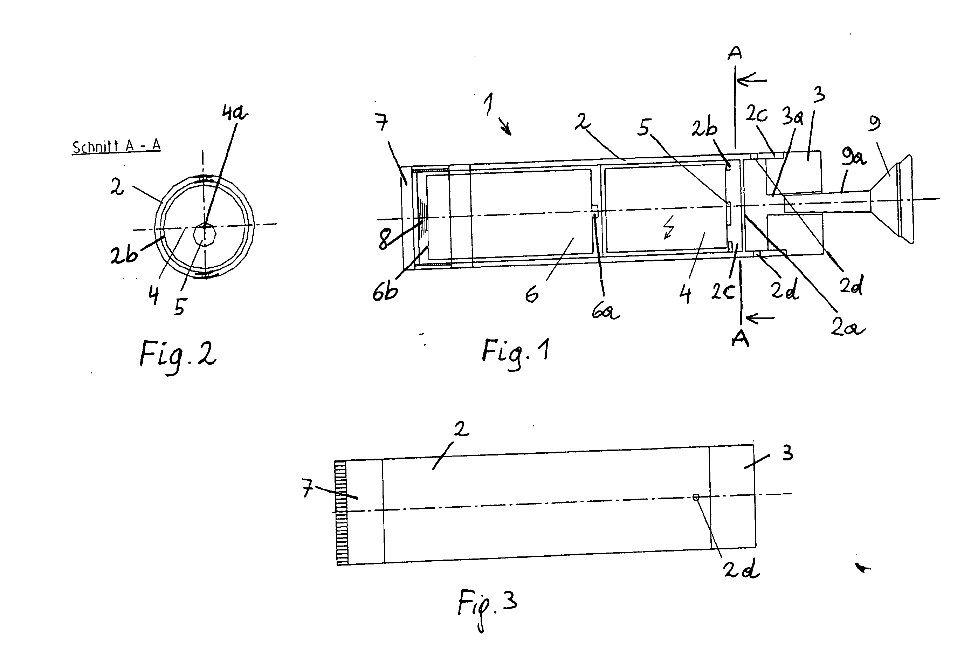

Die Erfindung wird nun anhand eines nicht einschränkenden Ausführungsbeispiels unter Bezugnahme auf die Zeichnungen näher beschrieben. In den Zeichnungen zeigen Fig. 1 einen Längsschnitt durch das erfindungsgemäße Lippen-Massagegerät, Fig. 2 einen Querschnitt entlang der Linie A-A von Fig. 1, und Fig. 3 eine Seitenansicht.

Das erfindungsgemäße Lippen-Massagegerät 1 für Blechbläser umfasst ein zylindrisches Gehäuse 2 aus einem steifen Material, wie z.B. einem harten Kunststoff. Im hohlen Inneren des Gehäuses 2 ist eine Vibrationseinrichtung aufgenommen, die einen Elektromotor 4 und ein an der Antriebswelle 4a des Elektromotors 4 exzentrisch und drehfest befestigtes Unwuchtgewicht 5 umfasst. Der Elektromotor 4 liegt mit seiner vorderen Umfangskante an einem ringförmigen Vorsprung 2b des Gehäuses 2 an. Der ringförmige Vorsprung 2b unterstützt einerseits die Übertragung von mechanischen Schwingungen des Unwuchtgewichts 5 auf das Gehäuse 2 und definiert andererseits einen Freiraum 2c zwischen dem Motor 4 und einer das Gehäuse 2 an seiner Deckfläche dicht verschließenden Querwand 2a, in welchem Freiraum 2c das Unwuchtgewicht 5 ungehindert schwingen kann. Der Elektromotor 4 ist so in das Gehäuse 2 eingepasst, dass seine zylindrische Umfangswand an der Innenseite des Gehäuses 2 anliegt, um die mechanischen Schwingungen des Unwuchtgewichts 5 optimal auf das Gehäuse 2 zu übertragen. Ebenfalls im Inneren des Gehäuses 2 ist eine Energieversorgungseinheit 6 in Form einer Batterie oder eines Akkumulators angeordnet. Ein elektrischer Pol 6a liegt an der Bodenfläche des Elektromotors 4 an, der andere elektrische Pol 6b liegt an einer Feder 8 an, die mit einem nicht dargestellten elektrischen Leiter verbunden ist, der elektrisch an den Elektromotor 4 angeschlossen ist. Die Feder 8 drückt die Energieversorgungseinheit 6 gegen den Elektromotor 4 und spannt ihn dadurch gegen den ringförmigen Vorsprung 2a des Gehäuses 2 vor. Die Feder 8 ist an einer Kappe 8 befestigt, die einerseits als hermetischer Verschluss für das Innere des Gehäuses 2 fungiert und z.B. als Schraubverschluss oder Aufsteckkappe ausgebildet ist, und die im vorliegenden Ausführungsbeispiel auch als Schalter fungiert, der zusätzlich zu einer Ein-Aus-Funktion eine stufenlose Verstellbarkeit der Drehzahl des Elektromotors 4 ermöglicht, indem er z.B. in Zusammenwirkung mit dem Gehäuse 2 als Potentiometer ausgebildet ist.

Am über die Querwand 2a hinausragenden ringförmigen Endteil 2c des Gehäuses 2 ist erfindungsgemäß ein Mundstückadapter 3 schwingungsgekoppelt befestigt bzw. in einer einfachen Ausführungsform darin integriert. Es ist bevorzugt, den Mundstückadapter 3 austauschbar am Endteil 2c zu befestigen, beispielsweise durch eine Steck- oder Schraubverbindung. Der Mundstückadapter 3 besteht aus einem relativ starren Material, wie z.B. Messing oder Hartplastik, und weist eine Aufnahme 3a für ein Mundstück 9 eines Blechblasinstruments auf, wobei die Aufnahme 3a im vorliegenden Ausführungsbeispiel als leicht konisches Durchgangsloch ausgebildet ist, in das ein Rohrstutzen 9a des Mundstücks 9 eingesteckt werden kann. Weiters sind im Endteil 2c des Gehäuses 2 Luftaustrittslöcher 2d vorgesehen, die Luftführungswege zwischen dem Mundstück 9 und der Außenseite des Gehäuses 2 definieren, so dass der Musiker während der Benützung des Lippen-Massagegeräts 1 auch in das Mundstück 9 blasen kann und somit zusätzlich zur Lippenmassage Atemübungen durchführen kann.

Bei eingeschaltetem Lippenmassagegerät 1 werden die vom Unwuchtgewicht 5 erzeugten mechanischen Schwingungen über die Motorantriebswelle 4a auf den Motor 4, vom Motor 4 auf das Gehäuse 2, vom Gehäuse 2 auf den Mundstückadapter 3 und vom Mundstückadapter 3 auf das Mundstück 9 übertragen, wobei die mechanischen Schwingungen unter möglichst hoher Schwingungskopplung, d.h. möglichst ungedämpft, zwischen den erwähnten Teilen übertragen werden.

## Patentansprüche

1. Lippen-Massagegerät für Blechbläser mit einer Vibrationseinrichtung zur Erzeugung mechanischer Schwingungen, **gekennzeichnet durch** einen mit der Vibrationseinrichtung (4, 5) schwingungsgekoppelten Mundstückadapter (3), der eine Aufnahme (3a) für ein Mundstück (9) eines Blechblasinstruments aufweist.

2. Lippen-Massagegerät für Blechbläser nach Anspruch 1, **dadurch gekennzeichnet, dass** die Vibrationseinrichtung (4, 5) einen Elektromotor (4) und ein an einer Antriebswelle (4a) des Elektromotors exzentrisch befestigtes Unwuchtgewicht (5) aufweist.

3. Lippen-Massagegerät für Blechbläser nach Anspruch 2, **dadurch gekennzeichnet, dass** die Drehzahl des Elektromotors (4) verstellbar ist.

4. Lippen-Massagegerät für Blechbläser nach Anspruch 2 oder 3, **dadurch gekennzeichnet, dass** das Unwuchtgewicht (5) austauschbar und/oder seine Exzentrizität in Bezug auf die Motorwelle (4a) verstellbar ist.

5. Lippen-Massagegerät für Blechbläser nach einem der vorhergehenden Ansprüche, **dadurch gekennzeichnet, dass** die Aufnahme (3a) des Mundstückadapters (3) für ein Mundstück eines Blechblasinstruments als Durchgangsloch ausgebildet ist.

6. Lippen-Massagegerät für Blechbläser nach einem der vorhergehenden Ansprüche, **gekennzeichnet durch** ein Gehäuse (2), in dem die Vibrationseinrichtung (4, 5) schwingungsgekoppelt aufgenommen ist und an dem der Mundstückadapter (3) befestigbar oder integriert ist.

7. Lippen-Massagegerät für Blechbläser nach Anspruch 6, **dadurch gekennzeichnet, dass** die Vibrationseinrichtung (4, 5), vorzugsweise zusammen mit einer Energieversorgungseinheit (6), hermetisch im Gehäuse (2) verschließbar ist.

8. Lippen-Massagegerät für Blechbläser nach einem der vorhergehenden Ansprüche, **dadurch gekennzeichnet, dass** im Mundstückadapter (3) und/oder im Gehäuse (2) Luftführungen (2d) angeordnet sind, durch die die Aufnahme (3a) des Mundstückadapters (3) mit der Umgebung kommuniziert.

9. Lippen-Massagegerät für Blechbläser nach einem der vorhergehenden Ansprüche, **dadurch gekennzeichnet, dass** der Mundstückadapter (3) und gegebenenfalls das Gehäuse (2) aus einem steifen Material, wie z.B. Metall, Hartplastik oder Holz, geformt sind.

## Claims

1. A lip massage device for brass-wind players, comprising a vibration device for the generation of mechanical vibrations, **characterized by** a mouthpiece adapter (3) which is vibration-coupled to the vibration device (4, 5) and comprises a seat (3a) for a mouthpiece (9) of a brass instrument.

2. A lip massage device for brass-wind players according to claim 1, **characterized in that** the vibration device (4, 5) comprises an electric motor (4) and an unbalance weight (5) fastened eccentrically to a drive shaft (4a) of the electric motor.

3. A lip massage device for brass-wind players according to claim 2, **characterized in that** the rotational speed of the electric motor (4) is adjustable.

4. A lip massage device for brass-wind players according to claim 2 or 3, **characterized in that** the unbalance weight (5) is replaceable and/or its eccentricity is adjustable with respect to the motor shaft (4a).

5. A lip massage device for brass-wind players according to any of the preceding claims, **characterized in that** the seat (3a) of the mouthpiece adapter (3) for a mouthpiece of a brass instrument is designed as a through hole.

6. A lip massage device for brass-wind players according to any of the preceding claims, **characterized by** a casing (2) in which the vibration device (4, 5) is accommodated in a vibration-coupled manner and to which the mouthpiece adapter (3) is attachable or in which it is integrated.

7. A lip massage device for brass-wind players according to claim 6, **characterized in that** the vibration device (4, 5) is hermetically sealable in the casing (2), preferably together with an energy supply unit (6).

8. A lip massage device for brass-wind players according to any of the preceding claims, **characterized in that** air ducts (2d) are arranged in the mouthpiece adapter (3) and/or in the casing (2), through which air ducts the seat (3a) of the mouthpiece adapter (3) communicates with the environment.

9. A lip massage device for brass-wind players according to any of the preceding claims, **characterized in that** the mouthpiece adapter (3) and optionally the casing (2) are formed from a rigid material such as, e.g., metal, hard plastic or wood.

## Revendications

1. Appareil de massage pour les lèvres d'un joueur d'instruments à vent, avec un dispositif producteur de vibrations pour produire des vibrations mécaniques, **caractérisé par** un adaptateur de pièce de bec (3), couplé en vibration au dispositif producteur de vibrations (4, 5), présentant un logement (3a) pour un bec (9) d'un instrument à vent.

2. Appareil de massage pour les lèvres d'un joueur d'instruments à vent selon la revendication 1, **caractérisé en ce que** le dispositif producteur de vibrations (4, 5) présente un moteur électrique (4) et une masse de balourd (5), fixée excentriquement à l'arbre d'entraînement (4a) du moteur électrique.

3. Appareil de massage pour les lèvres d'un joueur d'instruments à vent selon la revendication 2, **caractérisé en ce que** la vitesse de rotation du moteur électrique (4) est réglable.

4. Appareil de massage pour les lèvres d'un joueur d'instruments à vent selon la revendication 2 ou 3, **caractérisé en ce que** la masse de balourd (5) est amovible et/ou son excentricité par rapport à l'arbre de moteur (4a) est réglable.

5. Appareil de massage pour les lèvres d'un joueur d'instruments à vent selon l'une des revendications précédentes, **caractérisé en ce que** le logement (3a) de l'adaptateur de bec (3) est réalisé en tant que trou de passage pour un bec d'un instrument à vent.

6. Appareil de massage pour les lèvres d'un joueur d'instruments à vent selon l'une des revendications précédentes, **caractérisé par** un boîtier (2), dans lequel le dispositif producteur de vibrations (4, 5) est logé en étant couplé en vibration, et sur lequel l'adaptateur de bec (3) est susceptible d'être fixé ou est intégré.

7. Appareil de massage pour les lèvres d'un joueur d'instruments à vent selon la revendication 6, **caractérisé en ce que** le dispositif producteur de vibrations (4, 5) est susceptible d'être enfermé hermétiquement dans le boîtier (2), de préférence conjointement avec une unité d'alimentation en énergie (6).

8. Appareil de massage pour les lèvres d'un joueur d'instruments à vent selon l'une des revendications précédentes, **caractérisé en ce que**, dans l'adaptateur de bec (3) et/ou dans le boîtier (2), sont disposés des guidages d'air (2d), au moyen desquels le logement (3a) de l'adaptateur de bec (3) communique avec l'environnement.

9. Appareil de massage pour les lèvres d'un joueur d'instruments à vent selon l'une des revendications précédentes, **caractérisé en ce que** l'adaptateur de bec (3) et, le cas échéant, le boîtier (2) sont formés d'un matériau rigide, par exemple de métal, de matière synthétique dure, ou de bois.
